# EUROPEAN PATENT APPLICATION

(11) **EP 4 707 882 A1**
(43) Date of publication of application: **11.03.2026**
(21) Application number: 24198641.3
(22) Date of filing: 05.09.2024
(51) Int. Cl.: G02B 6/10, G01J 1/44, G02B 6/30, G01J 1/04

(54) **OPTICAL DEVICE**

(71) Applicant: Pixel Photonics GmbH, 48149 Münster (DE)
(72) Inventor: Walter, Nicolai, 48149 Münster (DE); Hartmann, Wladick, 48149 Münster (DE)
(74) Representative: Pelster Behrends Patentanwälte PartG mbB

(57) **Abstract**

The invention relates to an optical device (10), comprising: i) an optical slab waveguide (12), ii) an optical coupling element (14), iii) a transmission channel (16) for transmitting an optical signal comprising a multitude of signal modes onto the coupling element (14) with an angle of incidence of 75° or less, and iv) an SNSPD-system, comprising one or more nanowires (18), wherein the coupling element (14) is designed to at least partially couple the optical signal transmitted by the transmission channel (16) into the plane of the slab waveguide (12), wherein the slab waveguide (12) is designed so that the coupled parts of the optical signal can be guided away from the coupling element (14) in the plane of the slab waveguide (12) in a multitude of different directions, wherein the one or more nanowires (18) of the SNSPD-system are arranged around the coupling element (14) so that that the coupled parts of the optical signal that are guided away from the coupling element (14) through the slab waveguide (12) can interact with the one or more nanowires (18) of the SNSPD-system in a plurality of different detection directions, wherein the plurality of different detection directions comprises at least 3 detection directions D that enclose an angle of 10° or more with all of the other detection directions D.

## Description

The present invention relates to an optical device for detecting an optical signal comprising a multitude of optical modes and a corresponding method for detecting an optical signal with such an optical device.

The fields of quantum technology and quantum optics are among the most promising branches of technology that have the potential to provide solutions for long existing problems in many fields and exhibit a high potential for innovative products and applications. In recent years, significant technological progress in this field was made that contributed to an increased awareness for the potential of the technology but also increased the demand for new solutions for remaining challenges.

In particular, modern quantum technology is in need for efficient, scalable, fast and secure single photon detectors. Significant improvements were obtained by the use of superconducting nanowire single photon detectors (SNSPDs). More information regarding the technological background is e.g. disclosed in WO2023/012039 A1 and WO2023/012040 A1.

For standard SNSPDs, the light enters from outside the plane on which the superconducting nanowire is located. As a result, the thickness of the superconducting wire (a few nanometers) corresponds to the absorption length, so that with each pass of the light there is only a small probability of absorbing and thus detecting a photon. In order to improve absorption, the meanders of the standard SNSPDs are typically placed in optical cavities, which limit the spectral range and require additional manufacturing steps. Furthermore, in most cases a high fill factor is required for good detector efficiency, which is achieved by long or many meanders. However, this results in two shortcomings. On the one hand, the detection speed decreases with the length of the nanowires. On the other hand, using large numbers of nanowires, especially long ones, places considerable demands on the manufacturing process and thus reduces the yield.

A very promising technology, that overcomes several of the disadvantages of standard SNSPDs is the use of waveguide-integrated superconducting nanowire single photon detectors (WI-SNSPD) that can detect broadband light which propagates in a waveguide on which they are integrated with a high efficiency. Unlike standard SNSPDs, WI-SNSPDs couple to the light within the plane. That is, the absorption length corresponds to the detector length, so overall shorter wires are sufficient to achieve almost perfect external quantum efficiency. However, due to their integration on a nanophotonic waveguide, these detectors are only suitable for detecting light in this waveguide and, according to the prior of the art, these waveguides are single-mode or at best few-mode waveguides, while powerful solutions for the use of WI-SNSPD for the detection of multimode signals are missing. Therefore, multimode signals are typically detected using standard SNSPDs which use one meander, or several interwoven meanders, to cover the mode range of the multi-mode signal, that is e.g. transmitted by a multi-mode fiber, bundles of several single-mode fibers or even free beams.

It would be highly desirable to obtain an optical device that allows the use of WI-SNSPD technology for the efficient detection of multi-mode signals, wherein it would be desirable that the optical devices is capable of providing detailed information about the detected multi-mode signal.

It was the primary objective of the present invention to overcome or at least reduce the disadvantages of the prior art.

In particular, it was an objective of the present invention to provide an optical device that allows for the detection of multi-mode signals with a very high quantum efficiency.

Furthermore, it was an objective of the present invention that the optical devise should be capable of providing detailed information about the detected multi-mode signal.

Especially, it was an objective of the present invention that the optical devise should be usable as a single photon camera.

Insofar, it was desirable that the optical devise should be comparably robust as well as manufacturable in a comparably time and cost efficient manner.

Additionally, it was an objective of the present invention to provide for an efficient method for detecting a multi-mode optical signal with such an optical device.

The inventors of the present invention have now found that the above-described objectives can surprisingly be achieved, if an optical device is provided that comprises an optical slab waveguide and an optical coupling element for coupling a multi-mode optical signal that is provided by a transmission channel into the plane of the slab waveguide in combination with a SNSPD-system, comprising one or more nanowires, that are arranged around the coupling element in order to detect the coupled signal in different detection directions within the plane of the slab waveguide as defined in the claims, wherein the inventors were able to identify several beneficial embodiments.

The aforementioned objectives are solved by the subject-matter of the present invention as defined in the claims. Hereinafter, the subject-matter of the invention is discussed in more detail, wherein preferred embodiments of the invention are disclosed.

It is particularly preferred to combine two or more of the preferred embodiments to obtain an especially preferred embodiment. Correspondingly, especially preferred is an optical device according to the invention, that defines two or more features of preferred embodiments of the present invention. Also preferred are embodiments in which a feature of one embodiment that is to some extent designated as preferred is combined with one or more further features of other embodiments that are designated to some extent as preferred. Features of preferred methods and uses result from features of preferred optical devices.

Especially preferred embodiments of the invention are disclosed in the exemplary embodiments. Particularly preferred embodiments of the invention comprise two or more, preferably three or more, more preferably four or more, of the preferred features of the invention disclosed below, which are also implemented in the exemplary embodiments.

The present invention relates to an optical device, in particular for detecting an optical signal comprising a multitude of optical modes, comprising:
i) an optical slab waveguide,
ii) an optical coupling element,
iii) a transmission channel for transmitting an optical signal comprising a multitude of signal modes onto the coupling element with an angle of incidence of 75° or less, and
iv) an SNSPD-system, comprising one or more nanowires,
   wherein the coupling element is designed to at least partially couple the optical signal transmitted by the transmission channel into the plane of the slab waveguide,
   wherein the slab waveguide is designed so that the coupled parts of the optical signal can be guided away from the coupling element in the plane of the slab waveguide in a multitude of different directions,
   wherein the one or more nanowires of the SNSPD-system are arranged around the coupling element so that that the coupled parts of the optical signal that are guided away from the coupling element through the slab waveguide can interact with the one or more nanowires of the SNSPD-system in a plurality of different detection directions,
   wherein the plurality of different detection directions comprises at least 3 detection directions D that enclose an angle of 10° or more with all of the other detection directions D.

The optical device of the present invention is designed to detect an optical signal comprising a multitude of optical modes. For this, the optical device of the present invention is based on the SNSPD technology, i.e. the use of superconducting nanowire single photon detectors. The skilled person in the field of quantum technology and quantum optics is well familiar with the SNSPD technology and the underlying concepts.

An SNSPD detector comprises one or more superconducting nanowires that are cooled below their superconducting critical temperature and biased with an electrical current. The absorption of a photon in an element causes the superconductivity at that point to collapse, which can be read as a voltage pulse ('click') and represents the detection event.

As described above, it was suggested in the prior art to integrate the nanowires into waveguides and allow for an in-plane coupling of the light and the nanowires.

While such WI-SNSPD typically employ linear waveguides, the optical device of the present invention comprises an optical slab waveguide as the waveguiding structure. In contrast to classical waveguides, a slab waveguide is a planar structure that allows the propagation of an optical signal in a plane, e.g. in a multitude of directions. The skilled person is familiar with the general concept of slab waveguides that are used in the field for other applications.

It can be considered to be an advantage of the present invention that the slab waveguide is not limited to a particular material. Instead, all typical materials that are used in the field for waveguiding structures can be employed, wherein especially good results are usually obtained using silicon nitrate-based slab waveguides. Exemplary is an optical device according to the invention, wherein the slab waveguide is selected from the group consisting of waveguides formed from di-electric and/or transparent materials, preferably selected from the group consisting of Al₂O₃, Si₃N₄, GaAs, AIN, SOI (Silicon on insulator) and LiNbO₃, more preferably Si₃N₄.

In agreement with the skilled person's understanding, the slab waveguide will typically be arranged on a substrate. In most cases this inherently results from the manufacturing process that is regularly employed in the field to manufacture waveguiding structures. The substrate will typically comprise the initial material on which the optical device is formed, which is oftentimes silicon. Typically, an oxide and a silicon nitride layer will be deposited on that initial material, wherein the silicon nitride will act as the photonic material, which is structured to obtain the slab waveguide, while the underlying layers form the substrate. Especially relevant for most applications is an optical device according to the invention, wherein the optical device comprises a substrate, wherein the substrate preferably is a silicon-based substrate. Correspondingly, an optical device according to the invention is especially relevant, wherein the slab waveguide is arranged on the substrate, preferably directly on the substrate.

The multi-mode signal that shall be detected using the optical device of the present invention needs to be provided. For this the optical device comprises a transmission channel for transmitting an optical signal comprising a multitude of signal modes onto the coupling element. In agreement with this definition, the transmission channel is not a single-mode optical fiber. Instead, the transmission channel is designed so that it can transmit a signal comprising a multitude of signal modes. Preferred is an optical device according to the invention, wherein the transmission channel is designed for transmitting an optical signal comprising 50 or more, preferably 100 or more, more preferably 1000 or more, most preferably 1000 or more, signal modes.

At least in theory it is possible that the multi-mode optical signal is provided using a bundle of several single-mode or few-mode optical fibers. However, for the vast majority of applications the inventors consider it beneficial to use a multi-mode optical fiber. Thus, for some applications an optical device according to the invention can be envisioned, wherein the transmission channel comprises a plurality of optical fibers, preferably 50 or more, more preferably 100 or more, most preferably 500 or more, especially preferred 1000 or more, in particular preferred 10000 or more. However, preferred for most applications is an optical device according to the invention, wherein the transmission channel comprises or consists of a multi-mode optical fiber.

Multi-mode optical fibers are well-known to the skilled person and suitable products are commercially available from several suppliers. Multi-mode optical fibers will typically comprise a fiber core that has a much larger diameter than single-mode optical fibers. Preferred is an optical device according to the invention, wherein the multimode optical fiber comprises a fiber core that is embedded in a cladding, wherein the fiber core has an average diameter of 30 µm or more, preferably of 40 µm or more, more preferably of 50 µm or more. Additionally or alternatively, an optical device according to the invention is preferred, wherein the multimode optical fiber comprises a fiber core that is embedded in a cladding, wherein the fiber core has an average diameter in the range of 30 to 1000 µm, in the range of 35 to 800 µm, more preferably in the range of 40 to 600 µm.

In view of the above disclosure the skilled person understands that the multi-mode optical signal shall eventually be detected in the slab waveguide and that the multi-mode optical signal needs to be brought into the plane of the waveguide. For this, the optical device of the present invention comprises an optical coupling element.

The optical coupling element is designed to couple at least a part of the optical signal transmitted by the transmission channel into the plane of the slab waveguide. Suitable optical coupling elements are in principle known from other applications of the prior art and can in principle take different forms, as long as they fulfill their purpose. Generally preferred is an optical device according to the invention, wherein the coupling element is integrated into the slab waveguide or in contact with the slab waveguide, preferably integrated into the slab waveguide. Typical for most applications will be an optical device according to the invention, wherein the coupling element is arranged on the substrate, preferably directly on the substrate.

While in principle a broad variety of optical coupling elements could be used to put the invention into practice, the inventors were able to identify a specific type of optical coupling element that was found to be very beneficial in the optical devices of the invention due to providing a high degree of coupling and a beneficial distribution of the signal in the plane of the slab waveguide while being very robust and comparably easy to manufacture. This optical coupling element that is preferred for all embodiments of the invention, utilizes a scattering structure that scatters the multi-mode optical signal that hits the optical coupling element and thereby scatters it into the plane of the slab waveguide. Thus, especially preferred is an optical device according to the invention, wherein the coupling element is designed to at least partially couple the optical signal transmitted by the transmission channel into the plane of the slab waveguide by scattering the signal. Correspondingly, preferred is an optical device according to the invention, wherein the slab waveguide is designed so that the coupled parts of the optical signal can be guided away from the coupling element in the plane of the slab waveguide in a multitude of different directions depending on the scattering of the optical signal.

The required scattering structure of the preferred optical coupling element can beneficially be formed by introducing spots or defects with a different refractive index directly into the slab waveguide, for example by using etching techniques that are established in the technical field for modifying such optical structures. Preferred is an optical device according to the invention, wherein the coupling element comprises a multitude of scattering defects in a waveguide portion, wherein the scattering defects have a different refractive index compared to the slab waveguide, wherein the scattering defect are preferably holes, more preferably air holes, wherein the waveguide portion preferably is part of the slab waveguide. Preferred is an optical device according to the invention, wherein the multitude of scattering defects are produced by etching, preferably using reactive ion etching (RIE) or inductively coupled plasma etching (ICP).

It is difficult to provide a set number for the number and size of such scattering elements without knowing the other parameters of the optical device. However, for a given optical device the skilled person is able to find a suitable set up in view of the above disclosure using routine optimization experiments and/or simulation software. For starting such an optimization process, the skilled person can for example start with a number of scatterers per area, i.e. scatterer density, corresponding to a fill factor of about 0.5, wherein the individual defects will preferably be smaller than the wavelength to be detected.

When realizing such a scattering-based optical coupling element the scattering structure is generally optimized so that as much light as possible is scattered from outside the plane into the plane. In contrast to some scattering structures known from the prior art, no specific interference effects need to be exploited in order to ensure broadband use. Instead, random or pseudo-random arrangements of the scattering bodies can be used. Thus, an optical device according to the invention is preferred, wherein the multitude of scattering defects are arranged in the coupling element in a random or pseudo random pattern, preferably a random pattern, wherein the distribution of scattering defects in the pattern is preferably determined using a quantum random number generator.

Furthermore, excellent results were obtained with an arrangement of the scattering defects that is essentially a hyperuniform structure, i.e. that the number variance of scattering defects within a theoretical, spherical observation window grows more slowly than the volume of said observation window. Correspondingly, an optical device according to the invention is preferred, wherein the multitude of scattering defects are arranged in an essentially hyperuniform structure.

The inventors recommend that an optical coupling element should be used that offers a high coupling efficiency, for examples by using the preferred scattering-based optical coupling element disclosed above. Preferred is an optical device according to the invention, wherein the coupling element is designed to couple 30 % or more, preferably 50 % or more, more preferably 80 % or more, of the optical signal transmitted by the transmission channel into the plane of the slab waveguide.

The inventors suggest that the efficiency of the in-plane coupling can be further enhanced by using reflective structures that are positioned so as to reflect any part of the multi-mode optical signal that was not coupled into the plane of the slab waveguide back through the optical coupling element in order to have another chance of coupling it into the plane, thereby increasing the ratio of the optical signal that is coupled into the plane of the slab waveguide. Preferred is therefore an optical device according to the invention, wherein the optical device is designed to reflect parts of the optical signal that passed through the coupling element and were not coupled into the plane of the slab waveguide back to the coupling element, wherein the optical device preferably comprises a reflective surface that is arranged under the coupling element on the opposite side of the transmission channel, wherein the reflective surface preferably is a mirror.

In order to allow for an efficient coupling, the transmission channel is arranged so that the transmitted signal can hit the coupling element, wherein the angle of incidence should not be too large. In agreement with the skilled persons understanding, the angle of incidence is defined in relation to the normal of plane, i.e. the direction perpendicular to the plane. Initially the inventors assumed that it is beneficial to choose an arrangement in which the optical signal hits the coupling element more or less perpendicular to the plane of the waveguide, i.e. with an angle of incidence of about 0°. While the inventors still consider this embodiment to be beneficial for several applications, in particular considering aspects of manufacturing efficiency, it was surprisingly found that excellent coupling efficiencies could be obtained with an angle of incidence of around 45°, in particular when using the specific scattering-based optical coupling element, making such an arrangement particularly preferred. In view of this, preferred is an optical device according to the invention, wherein the transmission channel is designed for transmitting an optical signal comprising a multitude of signal modes onto the coupling element with an angle of incidence of 60° or less, preferably 45° or less, more preferably 30° or less, most preferably 15° or less, in particular preferably 10° or less, especially preferably 5° or less, even more preferably 1° or less. However, additionally or alternatively preferred is an optical device according to the invention, wherein the transmission channel is designed for transmitting an optical signal comprising a multitude of signal modes onto the coupling element with an angle of incidence in the range of 15° to 75°, preferably in the range of 25° to 65°, more preferably in the range of 35° to 55°, in particular when an optical coupling element is used that comprises a multitude of scattering defects as disclosed above.

The specific arrangement of the transmission channel can be achieved by directly contacting the coupling element or by spacing it apart so that the coupling element is hit by the free beam, wherein the transmission channel can for example be fixated using an adhesive. Preferred is an optical device according to the invention, wherein the transmission channel is contacting the coupling element, or wherein the transmission channel is spaced apart from the coupling element so that the optical signal is transmitted to the coupling element as a free beam. Additionally or alternatively an optical device according to the invention is preferred, wherein the slab waveguide, the coupling element and the SNSPD-system are integrated into a first part of the optical device and wherein the transmission channel is separated from the first part and arranged relatively to the first part using fixing means, preferably an adhesive.

The skilled person understands that the optical signal that is coupled into the slab waveguide shall be guided in the slab waveguide, wherein the planar shape of the slab waveguide shall be utilized to allow for guiding the optical signal in several different directions. Correspondingly, according to the invention, the slab waveguide is designed so that the coupled parts of the optical signal can be guided away from the coupling element in the plane of the slab waveguide in a multitude of different directions.

The next essential component of the optical device is the SNSPD-system, wherein this term describes the one or more nanowires, that shall be used to detect the signal including any wiring and other infrastructure to allow for the detection.

According to the invention the one or more nanowires of the SNSPD-system are arranged so that the coupled parts of the optical signal that are guided away from the coupling element through the slab waveguide can interact with the one or more nanowires of the SNSPD-system. While in principle it would be possible to place the nanowires at the edges of the slab waveguide, e.g. perpendicular to the plane, it is preferred for basically all embodiments to arrange the nanowires in order to allow for an in-plane coupling between the optical signal in the slab waveguide and the nanowires, thereby adopting the concept of the waveguide integrated SNSPD. Therefore, an optical device according to the invention is preferred for basically all embodiments, wherein the one or more nano wires of the SNSPD-system are arranged so that the coupled parts of the optical signal that are guided away from the coupling element through the slab waveguide can interact with the one or more nanowires of the SNSPD-system through in plane coupling, and/or wherein the one or more nanowires of the SNSPD-system are arranged basically parallel to the plane of the slab waveguide. In other words, an optical device according to the invention is preferred, wherein the one or more nanowires of the SNSPD-system are integrated into the slab waveguide.

It can be considered an advantage of the present invention that the optical device is very flexible with respect to the type of nanowire that can be employed in the SNSPD-system, wherein typical nanowires can be used that are known in the industry for similar purposes. Preferred is an optical device according to the invention, wherein the one or more nanowires of the SNSPD-system consist of one or more superconducting material comprising Nb or Si, preferably NbN, NbTiN, MoSi or WSi, especially NbN.

An important aspect of the present invention is, that a high detection yield is obtained by detecting photons radially around the coupling element. For this, the one or more nanowires of the SNSPD-system are arranged around the coupling element so that the coupled parts of the optical signal that are guided away from the coupling element through the slab waveguide can interact with the one or more nanowires of the SNSPD-system in a plurality of different detection directions.

This set-up can be obtained by arranging the one or more nanowires around the coupling element, wherein two main concepts can be applied that vary with respect to the number of nanowires that are used. In a first embodiment, a single nanowire can be arranged at least circumferential around the coupling element. Alternatively, two or more separate nanowires can be used that are distributed over the circumference, wherein the later solution allows for an easier attribution of the detection event to one of the several nanowires and therefore is beneficial if the spatial distribution of the signal shall be analysed, wherein higher numbers of nanowires are useful for obtaining a high spatial resolution.

In view of the above, an optical device according to the invention is preferred, wherein the SNSPD-system consists of one nanowire, wherein the nanowire is arranged circumferentially around the coupling element over at portion of the circumference, preferably over 50 % or more, more preferably over 70 % or more, most preferably over 90 % or more, of the circumference, wherein the nanowire preferably is arranged around the coupling element in a meander form. Yet, preferred is an optical device according to the invention, wherein the number of nanowires in the SNSPD-system is less than the number of signal modes in the optical signal.

Alternatively, an optical device according to the invention is preferred, wherein the SNSPD-system comprises two or more, preferably four or more, more preferably eight or more, nanowires, wherein the nanowires are positioned distributed over the circumference around the coupling element, preferably in a symmetric pattern, preferably rotational or axial symmetry. Especially preferred is an optical device according to the invention, wherein each of the two or more nanowires are arranged circumferentially around the coupling element over at portion of the circumference, preferably over 5 % or more, preferably 10 % or more, more preferably 15 % or more.

The skilled person understands that the nanowires will be spaced apart from the coupling element along the plane of the slab waveguide, for example 20 µm or more, preferably 40 µm or more, more preferably 60 µm or more. However, the inventors recommend that the spacing should not be too large. Preferred is an optical device according to the invention, wherein the one or more nano wires of the SNSPD-system are spaced apart from the coupling element by 5 mm or less, preferably 1 mm or less, more preferably 200 µm or less.

According to the above definition of the optical device according to the invention, the plurality of different detection directions comprises at least 3 detection directions D that enclose an angle of 10° or more with all of the other detection directions D. This means that while there might be a multitude of possible directions in that a detection via the SNSPD-system is possible, the optical device needs to be designed so that at least three of these detection directions can be identified as detection directions D, wherein each detection directions Dᵢ is oriented in the plane with respect to the other detection directions D_{j≠i}, so that the detection directions Dᵢ and D_{j≠i} enclose an angle of at least 10°. This feature, that is explained in more detail below with respect to the figures, defines that there is at least some degree of circumferential coverage in the plane around the optical coupling element and that the signal is not only detectable at just two points, e.g. left and right of the coupling element as could potentially be realized in a regular linear waveguide.

The more of these special detection directions D exist, for that the above conditions apply, the broader the circumferential coverage. At the same time larger minimum angles between the special detection directions D are indicative of at least a higher distribution between the detection directions. Preferred is an optical device according to the invention, wherein the plurality of different detection directions comprises at least 3 detection directions D that enclose an angle of 15° or more with all of the other detection directions D, preferably of 20° or more, more preferably 30° or more, most preferably 45° or more, in particular preferably 60° or more, especially preferably basically 120°. Additionally or alternatively, an optical device according to the invention is preferred, wherein the plurality of different detection directions comprises at least 6, preferably at least 12, more preferably at least 24, most preferably at least 32, detection directions D that enclose an angle of 10° or more with all of the other detection directions D.

However, the above definition can only express a minimum level of functional directions and/or define a minimum level of spatial resolution. At the same time, the inventors consider it particularly beneficial to have as much of the circumference covered by at least one nanowire in order to allow for a high yield and reduce the amount of signal that can bypass the SNSPD-system and thus avoid detection. Thus, preferred is an optical device according to the invention, wherein the one or more nanowires are arranged so that the plurality of different detection directions together cover a radian of at least 60°, preferably at least 120°, more preferably at least 180°, most preferably at least 240°, in particular at least 300°.

The above definition can suitably also be used to define the invention instead of the concept of detection directions D. Thus, using this alternative definition, the invention relates to an optical device, in particular for detecting an optical signal comprising a multitude of optical modes, comprising:
i) an optical slab waveguide,
ii) an optical coupling element,
iii) a transmission channel for transmitting an optical signal comprising a multitude of signal modes onto the coupling element with an angle of incidence of 75° or less, and
iv) an SNSPD-system, comprising one or more nanowires,
   wherein the coupling element is designed to at least partially couple the optical signal transmitted by the transmission channel into the plane of the slab waveguide,
   wherein the slab waveguide is designed so that the coupled parts of the optical signal can be guided away from the coupling element in the plane of the slab waveguide in a multitude of different directions,
   wherein the one or more nanowires of the SNSPD-system are arranged around the coupling element so that that the coupled parts of the optical signal that are guided away from the coupling element through the slab waveguide can interact with the one or more nanowires of the SNSPD-system in a plurality of different detection directions, wherein the one or more nanowires are arranged so that the plurality of different detection directions together cover a radian of at least 30°.

As will be apparent from the discussion of the method according to the invention below, one of the biggest advantages of the optical device of the present invention is that it can be used as a single photon camera by analysing the spatial distribution of the detection events in the SNSPD-system. Therefore, an optical device according to the invention is especially preferred, wherein the optical device is a single photon imager.

In view of the above disclosure, it is apparent that the invention also relates to a method for detecting an optical signal with an optical device according to the invention, comprising the steps:
a) transmitting an optical signal comprising a multitude of signal modes through the transmission channel onto the coupling element with an angle of incidence of 75° or less, wherein the optical signal is coupled into the plane of the slab waveguide by the coupling element, wherein the coupled parts of the optical signal are guided away from the coupling element in the plane of the slab waveguide in a multitude of different directions,
b) detecting the coupled parts of the optical signal that are guided in the plane of the slab waveguide with the SNSPD-system in a plurality of different detection directions, wherein the plurality of different detection directions comprises at least three detection directions D that enclose an angle of 10° or more with all of the other detection directions D,
   wherein the one or more nanowires of the SNSPD-system are cooled below their superconducting critical temperature and biased with an electrical current, wherein the coupled parts of the optical signal are detected based on a localized breakdown of superconductivity caused by the interaction of the scattered parts of the optical signal with the one or more nanowires.

Due to the fact that the SNSPD-system circumferentially surrounds the coupling element that couples the multi-mode signal into the slab waveguide is a multitude of directions, a specific multi-mode signal will result in a specific detection response of the SNSPD-system due to a different signal distribution over the different nanowires and/or parts of the nanowires. This specific pattern can be used to extract a spatial information about the signal distribution. Correspondingly, a method according to the invention is preferred, wherein the coupled parts of the optical signal that are detected with the SNSPD-system are attributed to a detection direction or a group of detection directions, to obtain a distribution information about the coupled optical signal into the different detection directions.

For achieving such a distribution information two concepts can be applied individually or in combination. A very efficient approach is to attribute each detection event to the nanowire that detected it, wherein a spatial information can be derived from the known position of the nanowire if desired. This approach is naturally limited with respect to the obtainable resolution by the number of nanowires. Additionally or alternatively, the detection events can be attributed to different parts of a nanowire, e.g. by differential reading of the signal at both ends of the nanowire. While the attribution to different parts of the nanowire is the only feasible option if only one nanowire is employed, the concept can be combined with the use of two or more nanowires to increase the resolution more independently of the number of nanowires. Preferred is a method according to the invention, wherein the distribution information is obtained by attributing the coupled parts of the optical signal to the nanowire that detected the coupled part of the optical signal, and/or wherein the distribution information for an individual nanowire is obtained by attributing the coupled parts of the optical signal to the portion of the nanowire that detected the coupled part of the optical signal, wherein the portion of the nanowire is preferably identified by differential reading of the signal at both ends of the nanowire.

The distribution information is characteristic for a given multi-mode input signal and can be used to characterize the analysed multi-mode signal. If sufficient data is available that allows to correlate the characteristics and/or content of the input signal to the detected response obtained in the method according to the invention, it becomes possible to reconstruct the characteristics and/or the content of the input signal. Therefore, a method according to the invention is preferred, further comprising the step of:
c) analysing the distribution information obtained for an optical signal to derive content information about the optical signal, wherein preferably the content information comprises a reconstructed image.

In order to facilitate the analysis, the above-described concept of correlating known input signals to the detection result they produce can be employed by using a so-called transfer matrix that serves as a kind of calibration that allows reconstructing the content of the input signal based on the detection result obtained in the method according to the invention. Preferred is a method according to the invention, wherein the analysing is made by comparing the distribution information obtained for an optical signal with a transfer matrix, wherein the transfer matrix is obtained by calibrating the optical device with a plurality of optical calibration signals of known content, in particular with respect to the wavelength distribution in the optical calibration signals and recording the distribution information for each of the calibration signals.

Even more preferred is a method according to the invention that utilizes the power of artificial intelligence to analyse the detection result and to reconstruct the content of the detected signal. The Al based approach can be used in combination with the above-described concept of a transfer matrix, wherein the transfer matrix related to the transformation of the initial signal into a distribution of the signal in-plane can be fed as trainings data, e.g. in the framework of supervised learning. Thus, very preferred is a method according to the invention, wherein the analysing is made using an analysis module for deriving content information from distribution information of an optical signal using a machine learning module that is trained for deriving content information from distribution information of an optical signal collected with the optical device, wherein the analysis module comprises a memory storing the machine learning module and a processor for controlling the analysis module, wherein the analysis module is configured to provide the distribution information obtained for an optical signal as an input to the machine learning module and to analyse the distribution information using the machine learning module, wherein the machine learning module is trained for deriving content information from distribution information of an optical signal using a training set comprising a plurality of distribution information of optical training signals of known content that were obtained with the optical device. Especially preferred is a method according to the invention, wherein the machine learning module is trained using supervised learning. Alternatively or additionally preferred is a method according to the invention, wherein the machine learning module is a deep learning network or an artificial neural network.

Disclosed is also the use of an optical device according to the invention for detecting an optical signal comprising a multitude of optical modes.

Hereinafter, the invention is described in more detail, wherein preferred embodiments of the invention are disclosed with respect to the figures. The figures show:
- Fig. 1: a schematic visualization of an optical device according to the invention in a first preferred embodiment;
- Fig. 2: a schematic visualization of an optical device according to the invention in a second preferred embodiment;
- Fig. 3: a schematic visualization of an optical device according to the invention in a third preferred embodiment;
- Fig. 4: a schematic visualization of a preferred coupling element for use in an optical device according to the invention;
- Fig. 5: a schematic cross-sections of three preferred transmission channels for use in an optical device according to the invention;
- Fig. 6: a schematic visualization of the total radiant covered by the detection directions for two preferred optical devices according to the invention; and
- Fig. 7: a schematic visualization of the angle of incidence in an optical device according to the invention.

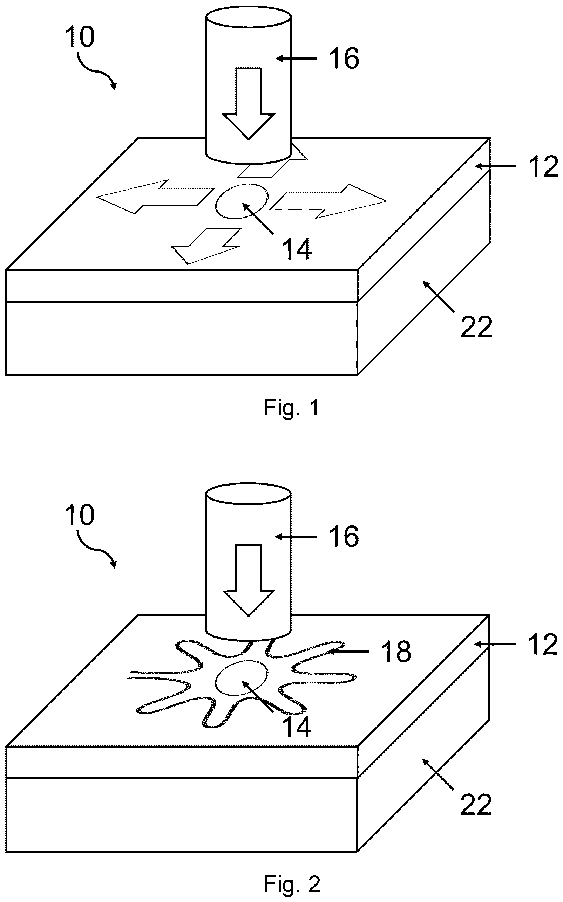

Fig. 1 provides a schematic visualization of an optical device 10 according to the invention in a first preferred embodiment, wherein the nanowires 18 of the SNSPD-system are not shown to facilitate the basic understanding.

The optical device 10 comprises an optical slab waveguide 12 that is position on a substrate 22 on which the optical slab waveguide 12 was formed. In the example of Fig. 1 the optical slab waveguide 12 is made from Si₃N₄, while the substrate 22 is silicon-based.

Above the plane of the optical slab waveguide 12 a multimode fiber, that is capable of transmitting an optical signal comprising a multitude of signal modes, is arranged as the transmission channel 16, wherein the transmission channel 16 is arranged essentially perpendicular to the plane of the optical slab waveguide 12, corresponding to an angle of incidence of essentially 0°.

Beneath the transmission channel 16 the optical device 10 comprises an optical coupling element 14 that is designed to couple as much of the optical signal transmitted by the transmission channel 16 as possible into the plane of the slab waveguide 12, wherein beneficially coupling efficiencies of close to 100 % can be obtained in many cases, in particular when a preferred scattering based coupling element 14 is employed, potentially in combination with a reflective surface underneath the slab waveguide 12. The coupled parts of the optical signal can be guided away from the coupling element 14 in the plane of the slab waveguide 12 in a multitude of different directions as indicated in Fig. 1 by the bold arrows. The coupling element 14 is integrated in the slab waveguide 12.

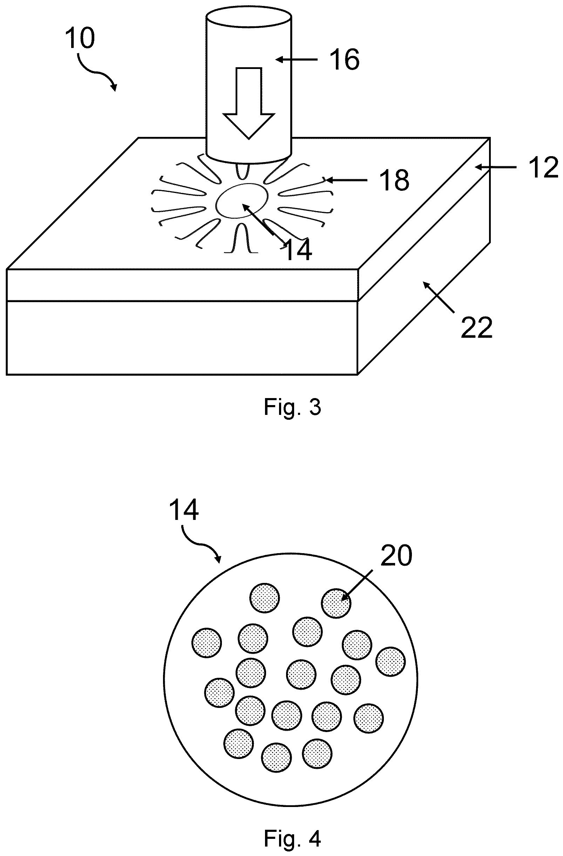

Fig. 2 and 3 are based on the general construction of the optical device 10 shown in Fig. 1 but include the SNSPD-system that is used to detect the optical signal, wherein Fig. 2 and 3 employ different preferred SNSPD-systems. For this, the SNSPD-system comprises one or more nanowires 18 that surround the coupling element 14 so that the coupled parts of the optical signal that are guided away from the coupling element 14 through the slab waveguide 12 can interact with the one or more nanowires 18 of the SNSPD-system.

In order to detect the optical signals, the superconducting nanowires 18 are cooled below their superconducting critical temperature and biased with an electrical current. The absorption of a photon in a nanowire causes the superconductivity at that point to collapse, which can be read as a voltage pulse ('click').

The nanowires in Fig. 2 and 3 are arranged so that the coupled parts of the optical signal that are guided away from the coupling element through the slab waveguide can interact with the one or more nanowires of the SNSPD-system through in plane coupling and are integrated into the slab waveguide 12 basically parallel to the plane of the slab waveguide 12.

Fig. 2 and 3 differ with respect to the layout of the SNSPD-system. In the optical device 10 of Fig.2 a single nanowire is arranged around the coupling element 14 over almost the entire circumference in a meander form. In contrast, in the optical device 10 of Fig.3 ten nanowires 18 are positioned distributed over the circumference around the coupling element 14 in a symmetric pattern, wherein each of the nanowires 18 is sufficiently long to cover about 7 % of the circumference.

Fig. 4 provides a schematic visualization of a preferred coupling element 14 for use in an optical device 10 according to the invention, in particular for the optical devices 10 of Fig. 1 to 3. This optical coupling element 14 utilizes a scattering structure with a plurality of scattering defects 20 that scatters the multi-mode optical signal that hits the optical coupling element 14 and thereby scatters it into the plane of the slab waveguide 12. The coupling element 14 of Fig. 4 can be produced by introducing a multitude of scattering defects 20 into the slab waveguide 12 that have a different refractive index compared to the surrounding material, for example by reactive ion etching, wherein random or pseudo-random distributions of the scattering defects 20 can be employed.

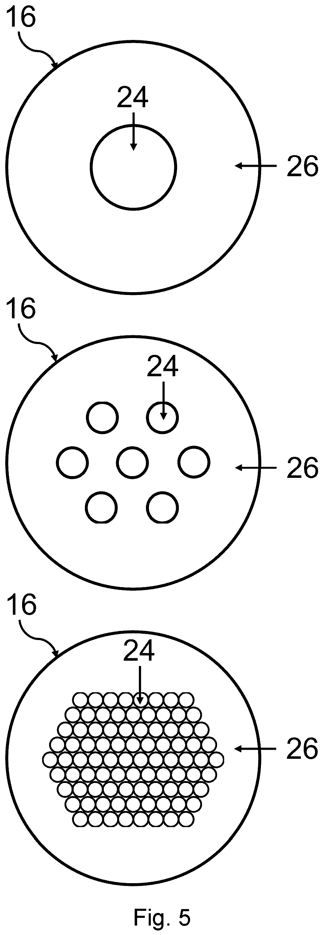

Fig. 5 shows three schematic cross-sections of preferred transmission 16 channels for use in an optical device 10 according to the invention. The cross section at the top is a multimode fiber in that a single fiber core 24 with a comparably large diameter, e.g. of 62,5 µm, is surrounded by a cladding 26. In contrast, the cross section in the middle comprises seven fiber cores 24 of few-mode fibers with an intermediate diameter, while in the bottom cross section a multitude of fiber cores 24 that correspond to single mode fibers are embedded in the cladding 26.

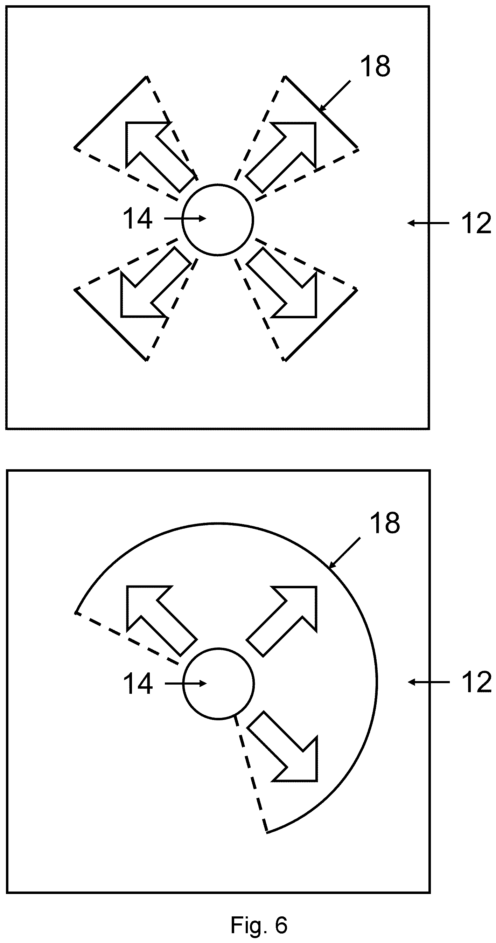

Fig. 6 is a schematic visualization of the total radiant covered by the detection directions for two preferred optical 10 devices according to the invention. A direction in which a detection event can occur due to the presence of a nanowire 18 is a detection direction. In the arrangement at the top of Fig. 6, four nanowires 18 are schematically arranged around the coupling element 14 and each result in a radiant in the plane of about 40° which is made up of detection directions, resulting in a combined radiant of about 120° and thus a coverage of about 33 %. In the bottom half of Fig. 6, a single nanowire 18 is schematically arranged around the coupling element, providing a continuous radiant of about 225°. Fig. 6 can also be used to understand the concept of the specific detection directions D that is used in the framework of the present invention to express that detection is possible around the coupling element 14 and not only on two sides. To check for the feature, the skilled person analyses if from all the possible detection directions at least three specific detection directions D can be identified for that the feature, that each said detection directions D encloses an angle of 10° or more with all of the other detection directions D, is fulfilled. In Fig. 6, these detection directions D can be assumed to be the bold arrows that each enclose with all the other arrows an angle of about 90° or about 180°, wherein three or four of these arrows can be placed in the top and bottom figure of Fig.6, respectively. In the embodiment shown at the top, it would not be possible to include a fifth detection directions D while keeping the angle at 90°. Correspondingly, it would not be possible to increase the angle.

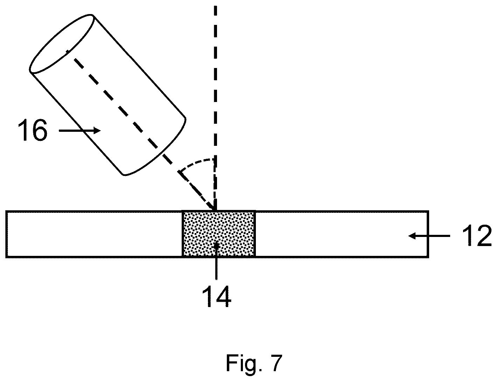

Fig. 7 shows a schematic visualization of the angle of incidence in an optical device 10 according to the invention and shows an arrangement of the transmission channel 16 that results in a particular beneficial angle of incidence of about 45°.

The optical device 10 of Fig. 1 to 3 can be used to analyse a multimode signal. The SNSPD-system that circumferentially surrounds the coupling element 14 that couples the multi-mode signal into the sap waveguide 12 in a multitude of directions will detect for each specific multi-mode signal a specific detection response, due to a different signal distribution over the different nanowires 18 and/or parts of the nanowires 18. From this distribution pattern, it is possible to correlate the characteristics and/or content of the input signal to the detected response and thus reconstruct the characteristics and/or the content of the input signal by use of a transfer matrix, wherein especially machine learning can be employed to obtain a very powerful single photon camera.

### Reference Signs

- 10: optical device
- 12: slab waveguide
- 14: coupling element
- 16: transmission channel
- 18: nanowires
- 20: scattering defects
- 22: substrate
- 24: fiber core
- 26: cladding

## Claims

1. Optical device (10), comprising:
i) an optical slab waveguide (12),
ii) an optical coupling element (14),
iii) a transmission channel (16) for transmitting an optical signal comprising a multitude of signal modes onto the coupling element (14) with an angle of incidence of 75° or less, and
iv) an SNSPD-system, comprising one or more nanowires (18),
wherein the coupling element (14) is designed to at least partially couple the optical signal transmitted by the transmission channel (16) into the plane of the slab waveguide (12),
wherein the slab waveguide (12) is designed so that the coupled parts of the optical signal can be guided away from the coupling element (14) in the plane of the slab waveguide (12) in a multitude of different directions,
wherein the one or more nanowires (18) of the SNSPD-system are arranged around the coupling element (14) so that that the coupled parts of the optical signal that are guided away from the coupling element (14) through the slab waveguide (12) can interact with the one or more nanowires (18) of the SNSPD-system in a plurality of different detection directions,
wherein the plurality of different detection directions comprises at least 3 detection directions D that enclose an angle of 10° or more with all of the other detection directions D.

2. Optical device (10) according to claim 1, wherein the coupling element (14) is designed to at least partially couple the optical signal transmitted by the transmission channel (16) into the plane of the slab waveguide (12) by scattering the signal.

3. Optical device (10) according to claim 2, wherein the coupling element (14) comprises a multitude of scattering defects (20) in a waveguide (12) portion, wherein the scattering defects (20) have a different refractive index compared to the slab waveguide (12).

4. Optical device (10) according to any one of claims 1 to 3, wherein the optical device (10) is designed to reflect parts of the optical signal that passed through the coupling element (14) and were not coupled into the plane of the slab waveguide (12) back to the coupling element (14).

5. Optical device (10) according to any one of claims 1 to 4, wherein the transmission channel (16) comprises or consists of a multimode optical fiber.

6. Optical device (10) according to any one of claims 1 to 5, wherein the one or more nanowires are arranged so that the plurality of different detection directions together cover a radian of at least 60°.

7. Optical device (10) according to any one of claims 1 to 6, wherein the one or more nanowires (18) of the SNSPD-system are arranged so that the coupled parts of the optical signal that are guided away from the coupling element (14) through the slab waveguide (12) can interact with the one or more nanowires of the SNSPD-system through in plane coupling.

8. Optical device (10) according to any one of claims 1 to 7, wherein the SNSPD-system consists of one nanowire (18), wherein the nanowire (18) is arranged circumferentially around the coupling element (14) over at portion of the circumference,
or
wherein the SNSPD-system comprises two or more nanowires (18), wherein the nanowires (18) are positioned distributed over the circumference around the coupling element (14).

9. Method for detecting an optical signal with an optical device (10) according to any one of claims 1 to 8, comprising the steps:
a) transmitting an optical signal comprising a multitude of signal modes through the transmission channel (16) onto the coupling element (14) with an angle of incidence of 75° or less, wherein the optical signal is coupled into the plane of the slab waveguide (12) by the coupling element (14), wherein the coupled parts of the optical signal are guided away from the coupling element (14) in the plane of the slab waveguide (12) in a multitude of different directions,
b) detecting the coupled parts of the optical signal that are guided in the plane of the slab waveguide (12) with the SNSPD-system in a plurality of different detection directions, wherein the plurality of different detection directions comprises at least three detection directions D that enclose an angle of 10° or more with all of the other detection directions D,
wherein the one or more nanowires (18) of the SNSPD-system are cooled below their superconducting critical temperature and biased with an electrical current, wherein the coupled parts of the optical signal are detected based on a localized breakdown of superconductivity caused by the interaction of the scattered parts of the optical signal with the one or more nanowires (18).

10. Method according to claim 9, wherein the coupled parts of the optical signal that are detected with the SNSPD-system are attributed to a detection direction or a group of detection directions, to obtain a distribution information about the coupled optical signal into the different detection directions.

11. Method according to claim 10, wherein the distribution information is obtained by attributing the coupled parts of the optical signal to the nanowire (18) that detected the coupled part of the optical signal.

12. Method according to any one of claims 10 or 11, wherein the distribution information for an individual nanowire (18) is obtained by attributing the coupled parts of the optical signal to the portion of the nanowire (18) that detected the coupled part of the optical signal.

13. Method according to any one of claims 10 to 12, further comprising the step of:
c) analysing the distribution information obtained for an optical signal to derive content information about the optical signal.

14. Method according to claim 13, wherein the analysing is made by comparing the distribution information obtained for an optical signal with a transfer matrix, wherein the transfer matrix is obtained by calibrating the optical device (10) with a plurality of optical calibration signals of known content and recording the distribution information for each of the calibration signals.

15. Method according to any one of claims 13 or 14, wherein the analysing is made using an analysis module for deriving content information from distribution information of an optical signal using a machine learning module that is trained for deriving content information from distribution information of an optical signal collected with the optical device (10),
wherein the analysis module comprises a memory storing the machine learning module and a processor for controlling the analysis module, wherein the analysis module is configured to provide the distribution information obtained for an optical signal as an input to the machine learning module and to analyse the distribution information using the machine learning module,
wherein the machine learning module is trained for deriving content information from distribution information of an optical signal using a training set comprising a plurality of distribution information of optical training signals of known content that were obtained with the optical device (10).
